**Europäisches Patentamt**

**European Patent Office**

**Office européen des brevets**

(11) Veröffentlichungsnummer : **0 394 830 B1**

(12) **EUROPÄISCHE PATENTSCHRIFT**

(45) Veröffentlichungstag der Patentschrift :
**02.12.92 Patentblatt 92/49**

(21) Anmeldenummer : **90107396.5**

(22) Anmeldetag : **19.04.90**

(51) Int. Cl.⁵ : **A01B 59/048**, A01B 61/04

(54) **Landwirtschafliches Anbaugerät insbesondere Kreiselmähwerk.**

(30) Priorität : **28.04.89 DE 3914085**

(43) Veröffentlichungstag der Anmeldung :
**31.10.90 Patentblatt 90/44**

(45) Bekanntmachung des Hinweises auf die
Patenterteilung :
**02.12.92 Patentblatt 92/49**

(84) Benannte Vertragsstaaten :
**AT CH DE DK FR GB IT LI NL**

(56) Entgegenhaltungen :
**DE-C- 3 022 887**
**DE-U- 8 701 093**
**GB-A- 2 052 237**

(73) Patentinhaber : **CLAAS SAULGAU GMBH**
**Postfach 1154**
**W-7968 Saulgau (DE)**

(72) Erfinder : **Reber, Erwin**
**Mittelbergstrasse 13**
**W-7968 Saulgau (DE)**
Erfinder : **Jakobi, Wilhelm**
**Mühlstrasse 32**
**W-7968 Saulgau-Bogenweiler (DE)**

EP 0 394 830 B1

Jouve, 18, rue Saint-Denis, 75001 PARIS

**Beschreibung**

Die Erfindung bezieht sich auf ein landwirtschaftliches Anbaugerät zum Front-Dreipunkt-Anbau an einem Schlepper nach dem Gattungsbegriff des Anspruches 1.

Eine bekanntgewordene Ausführung eines solchen Gerätes ist zum Beispiel in der DE-U 87 01 093 dargestellt. Beim Vorschlag nach dieser Schrift ist das die Mähwerkzeuge tragende Maschinengestell um eine mit Abstand oberhalb des Maschinengestells liegende Querachse am Tragrahmen schwenkbar gelagert, so daß bei der Arbeit die Mähkreisel den Bodenkonturen folgen können. Nachteilig ist, daß der Höhenabstand von der Abstützung der Mähtrommeln am Boden bis zu der Querachse sehr groß ist. Dadurch ergibt sich bei Anlaufen der Mähtrommeln an Hindernissen am Boden durch die Anlaufkraft ein Drehmoment um die Querachse, das schon bei verhältnismäßig geringen Anlaufkräften zur Folge hat, daß die Mähtrommeln um die Querachse kippen und so mit dem Außenumfang ihrer die Mähmesser tragenden Ringkragen in den Boden einspießen. Beschädigungen der Mähtrommeln können die Folge sein.

Aufgabe der vorliegenden Erfindung ist es, eine gattungsgemäße Maschine so zu verbessern, daß sie die ihr anhaftenden Mängel nicht mehr aufweist. Dieses Ziel wird dadurch erreicht, daß bei einer Ausführung nach dem Gattungsbegriff die Arme am Tragrahmen so weit nach unten gerichtet sind, daß die Gelenkverbindung mit Abstand unterhalb des Maschinengestelles unmittelbar oberhalb der in Bodennähe arbeitenden Arbeitswerkzeuge liegt. Da nun der Abstand von der Abstützung der Mähtrommeln am Boden bis zu der Querachse klein ist, bleibt auch bei verhältnismäßig großen Anlaufkräften an Hindernisse am Boden das Drehmoment um die Querachse immer noch so klein, daß ein Kippen der Mähkreisel um die Querachse und das damit verbundene Risiko einer Beschädigung der Mähkreisel vermieden wird.

Weitere Merkmale der Erfindung ergeben sich aus den Unteransprüchen, sowie aus der nachfolgenden Beschreibung.

Die Erfindung wird anhand von sechs Abbildungen am Beispiel eines Kreiselmähwerkes im Frontanbau erläutert.

Figur 1 zeigt ein Kreiselmähwerk in Arbeitsstellung in Seitenansicht

Figur 2 zeigt den gleichen Gegenstand von vorne

Figur 3 zeigt eine andere Ausführung in Seitenansicht

Figur 4 zeigt den gleichen Gegenstand von vorne

Figur 5 zeigt eine weitere Ausführung in Seitenansicht

Figur 6 zeigt den gleichen Gegenstand von vorne

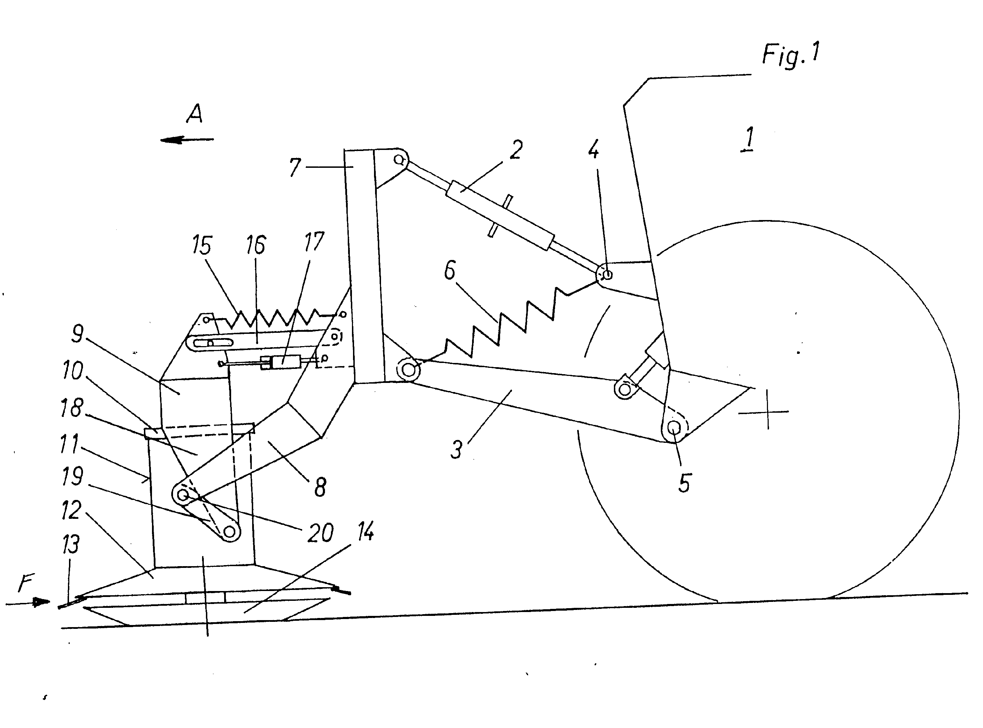

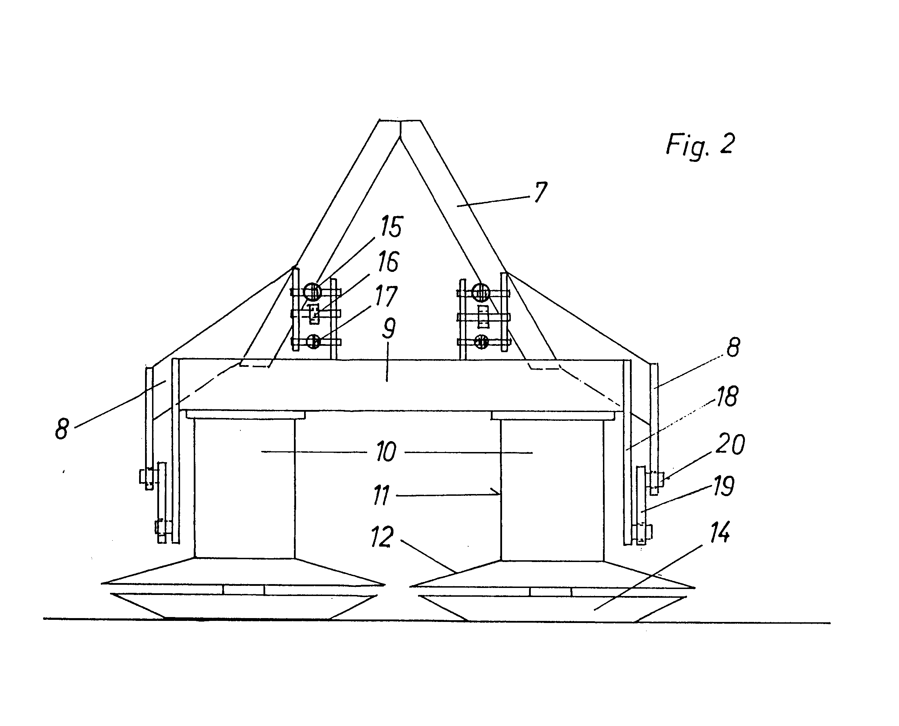

An der Stirnseite eines Schleppers (1) ist ein Dreipunktgestänge mit einem Oberlenker (2) und Unterlenkern (3) an oberen und unteren Anlenkpunkten (4, 5) montiert. Zugfedern (6) wirken so, daß das Dreipunkt-Gestänge entlastet wird. An den Ober- und Unterlenkern (2, 3) wird ein einem Kreiselmähwerk zugehöriger Tragrahmen (7) angebaut. Fest mit dem Tragrahmen (7) verbunden sind zwei Arme (8) (Figuren 1 und 2), die vom Tragrahmen (7) aus nach vorne und unten weisen.

An einem Maschinengestell (9) sind mehrere Mähtrommeln (10) gelagert, die einen Mantel (11), einen Ringkragen (12) mit Messern (13) und einen Gleitteller (14) tragen. Oberhalb des Maschinengestells (9) stellen Zugfedern (15), Langlochlaschen (16) und Dämpfungszylinder (17) eine Verbindung zwischen Maschinengestell (9) und Tragrahmen (7) her.

Bei der Ausführung nach Figuren 1 und 2 sind an den äußeren Stirnflächen des Maschinengestells (9) Stützarme (18) befestigt. Mit deren unterem Ende sind Laschen (19) gelenkig verbunden, die ihrerseits wieder in einem Drehpunkt (20) gelenkig an die freien Enden der Arme (8) angeschlossen sind. Die Laschen (19) sind durch nicht dargestellte Anschläge in ihrer Bewegung nach oben und unten begrenzt.

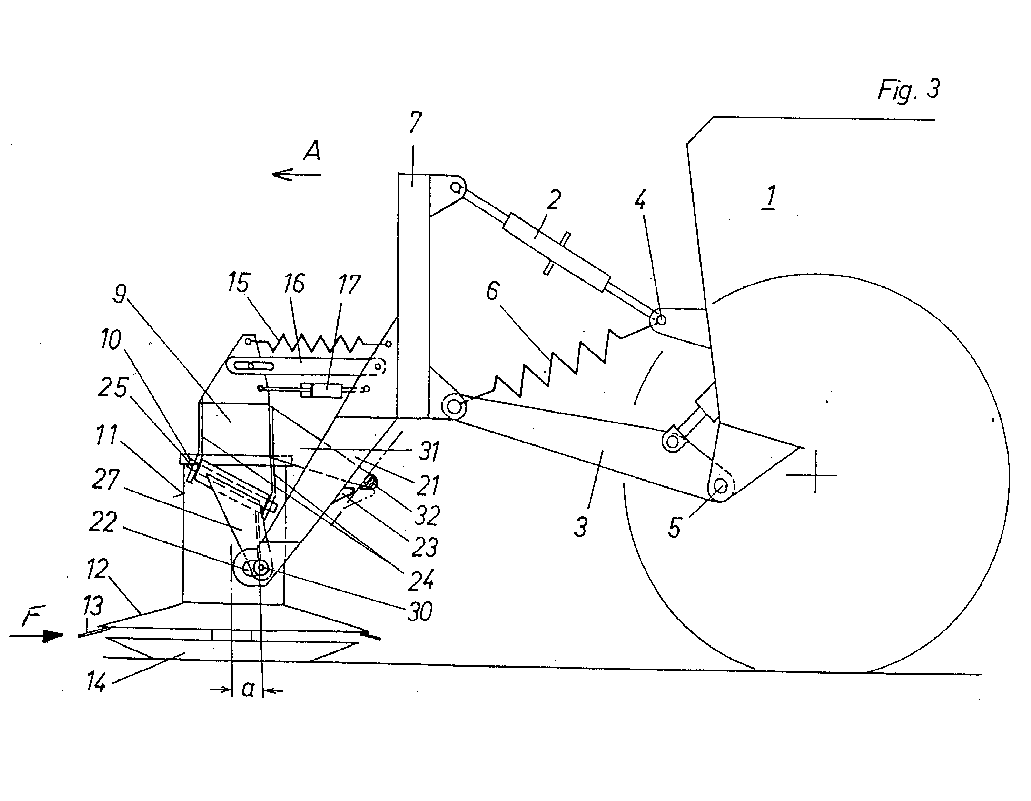

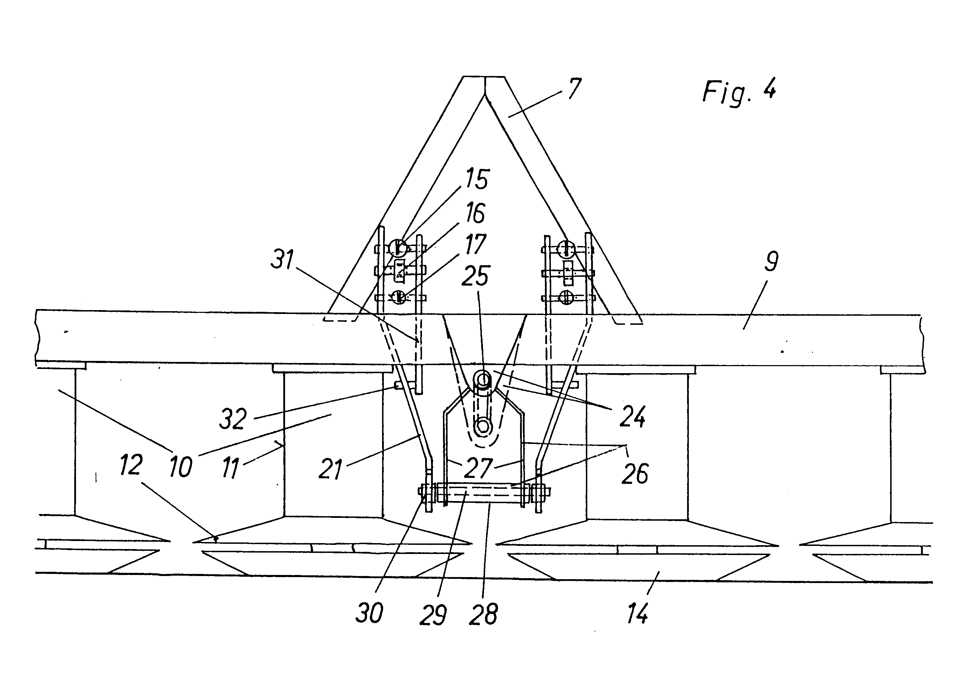

Bei einer Ausführung nach Figuren 3 und 4 stimmen wesentliche Teile mit denen der vorbeschriebenen Ausführung überein. Es werden deshalb nur die Abweichungen erläutert. An dem Tragrahmen (7) sind Arme (21) befestigt, die wieder nach vorne und unten weisen. Sie sind aber so eng gestellt, daß sie zwischen den mittleren Mähtrommeln (10) Platz finden. An ihrem unteren Ende haben sie horizontale Schlitze (22). An ihrer Rückseite befinden sich Anschlagnocken (23). An einem fest mit dem Maschinengestell (9) verbundenen Bock (24) ist eine Pendelachse (25) mit einer nach hinten abfallenden Neigung von ungefähr 30° gelagert. Die Pendelachse (25) wird von einem Träger (26) umfaßt, dessen beide Arme (27) nach unten verlaufen. Die Arme (27) nehmen am unteren Ende eine Hülse (28) auf, die von einer Querachse (29) durchsetzt wird. Die Querachse (29), die an ihren Enden Rollen (30) trägt, durchsetzt die horizontalen Schlitze (22) der Arme (21). Am Maschinengestell (9) sind Ausleger (31) befestigt, die zwischen den Armen (21) nach hinten durchtreten. Sie tragen Anschlagbolzen (32), die mit der Rückseite der Arme (21) und den Anschlagnocken (23) bei Rückwärtsfahrt in Wirkverbindung treten können.

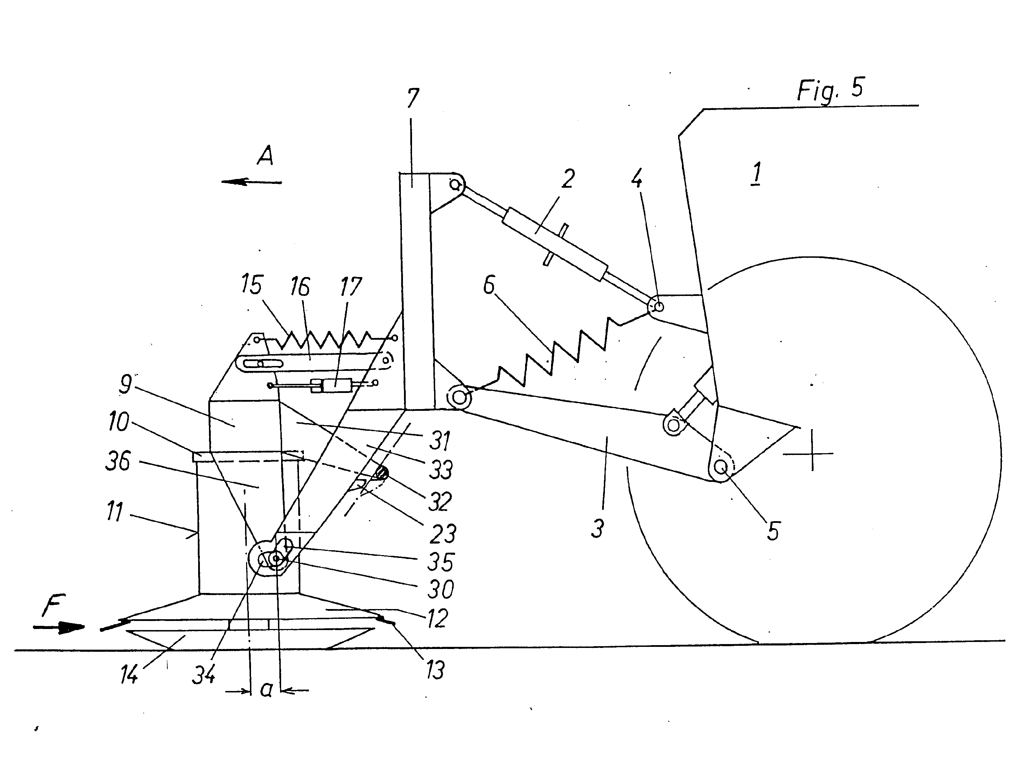

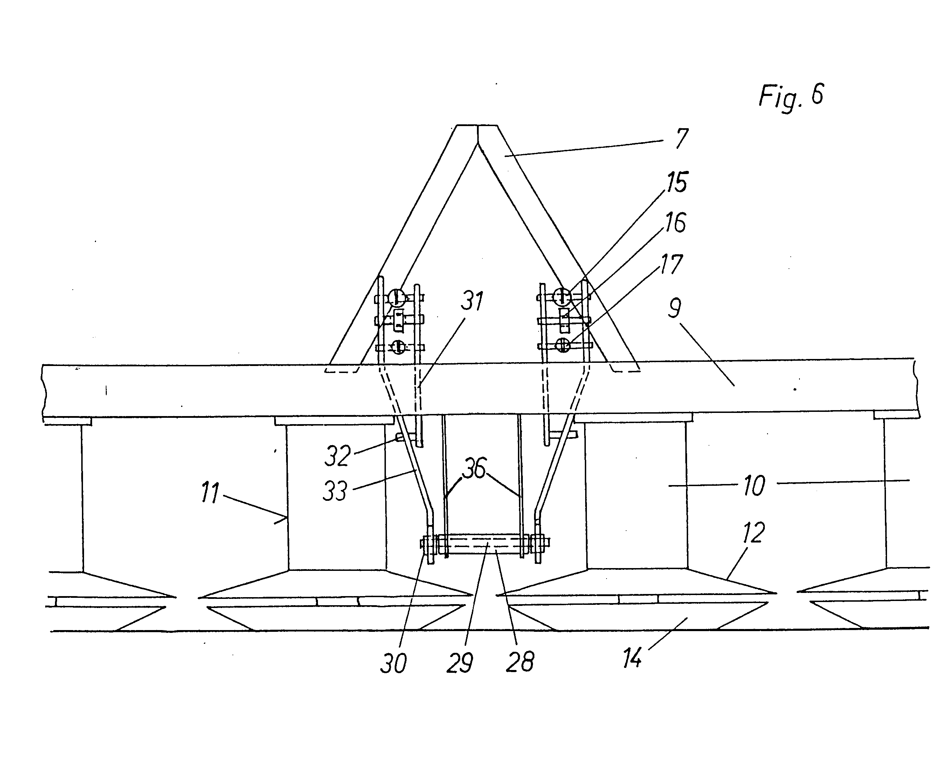

Die Figuren 5 und 6 zeigen eine Ausführung, die der von Figuren 3 und 4 ähnlich ist. Die Arme (33) haben am unteren Ende winkelförmige Schlitze mit einem horizontalen Abschnitt (34) und einem nach hinten schräg ansteigenden Abschnitt (35). Mit dem Maschinengestell (9) fest verbunden ist ein Träger (36) mit einer Hülse (28), die von einer Querachse (29) mit Rollen (30) durchsetzt wird.

Die Abbildungen zeigen die Mähwerke in Arbeitsstellung. Sie werden in Richtung der Pfeile A bewegt.

Wenn das Mähwerk nach Figuren 1 und 2 gegen ein in der Längsmittelebene liegendes Hindernis trifft, kann es nach oben und hinten ausweichen, weil sich beide Laschen (19) um den Drehpunkt (20) drehen können. Liegt das Hindernis außermittig, was der häufigste Fall ist, dann wird nur die Lasche (19) geschwenkt, auf deren Seite das Hindernis liegt. Diese Seite wird dadurch angehoben, während die andere Seite auf dem Boden bleibt. Nach der Überwindung des Hindernisses fällt die entsprechende Seite wieder auf den Boden zurück.

Bei dem Mähwerk nach Figuren 3 und 4 liegen bei der Vorwärtsfahrt die Rollen (30), wie gezeigt, am hinteren Ende des Schlitzes (22). Wenn das Mähwerk nach rückwärts bewegt wird, liegen die Rollen (30) am vorderen Ende des Schlitzes (22). Die Anschlagbolzen (32) liegen dann an der Rückseite der Arme (21) und an dem Anschlagnocken (23) an. Das Mähwerk ist dadurch festgehalten und kann sich nicht in den Boden einspießen. Wenn das Mähwerk bei der Vorwärtsfahrt auf ein außermittiges Hindernis auftrifft, entsteht ein Moment, das die betreffende Seite des Mähwerkes nach hinten dreht. Wegen der Schräglage der Pendelachse (25) hebt sich die Mähwerkseite, die nach hinten dreht zwangsweise an und kann dadurch das Hindernis überwinden.

Bei einer Ausführung nach Figuren 5 und 6 werden die Federn (6) derart gespannt, daß die Rollen (30) in der Knickstelle der winkelförmigen Schlitze (34, 35) liegen. Für die Vor- und Rückwärtsfahrt gilt sinngemäß das gleiche, wie vorher beschrieben. Wenn das Mähwerk auf ein außermittiges Hindernis auftrifft, kann die Rolle (30) auf der entsprechenden Seite in dem Schlitz (35) ansteigen, wodurch die betreffende Mähwerksseite nach hinten und oben ausweichen kann. Die Wirkung ist äquivalent zu der bei den vorher beschriebenen Ausführungen.

**Patentansprüche**

1. Landwirtschaftliches Anbaugerät, insbesondere Kreiselmähwerk, mit einem gelenkig an die Front-Dreipunktaufhängung (2, 3) eines Schleppers anschließbaren Tragrahmen (7) und einer Feder (6), über die ein Teil des Gerätegewichtes auf den- Schlepper übertragen wird und einem Maschinengestell (9) für die im Abstand unter ihm in geringer Höhe über dem Boden wirksamen, beispielsweise als Mähtrommeln (10) mit Schneidmesser (13) tragenden Ringkragen (12) ausgebildeten Arbeitswerkzeuge, das über eine Gelenkverbindung mit Querachse (19, 20, 28, 29) drehbar am freien Ende von am Tragrahmen (7) nach unten weisenden Armen (8, 21, 33) angeschlossen ist, wobei in Arbeitsstellung beim Auftreten einer, z. B. durch ein Hindernis hervorgerufenen, etwa in Höhe der Arbeitswerkzeuge (12, 13) zentrisch oder exzentrisch zur Längsmittelebene wirkenden Längskraft (F) die Seite des Mähwerkes, an der die Längskraft (F) auf das Mähwerk einwirkt, nach oben und hinten ausweichen kann, dadurch gekennzeichnet, daß die Arme (8, 21, 33) am Tragrahmen (7) soweit nach unten gerichtet sind, daß die Gelenkverbindung (19, 20, 28, 29) mit Abstand unterhalb des Maschinengestells (9) unmittelbar oberhalb der in Bodennähe arbeitenden Arbeitswerkzeuge (der Ringkragen 12) liegt.

2. Landwirtschaftliches Anbaugerät nach Anspruch 1, dadurch gekennzeichnet, daß die Gelenkverbindung durch Laschen (19) gebildet wird, die einerseits gelenkig mit dem freien Ende (20) der Arme (8) verbunden sind, in Arbeitsstellung von dort nach hinten und unten verlaufen und an ihrem unteren Ende mit Stützarmen (18) des Maschinengestelles (9) gelenkig verbunden sind.

3. Landwirtschaftliches Anbaugerät nach Anspruch 2, dadurch gekennzeichnet, daß die Arme (8), die Stützarme (18) und die Laschen (19) beidendig des Maschinengestells (9) vorgesehen und die Arbeitswerkzeuge (10) zwischen diesen am Maschinengestell (9) angeordnet sind.

4. Landwirtschaftliches Anbaugerät nach den Ansprüchen 2 und 3, dadurch gekennzeichnet, daß die freie Beweglichkeit der Laschen (19) nach oben und unten durch Anschläge begrenzt ist.

5. Landwirtschaftliches Anbaugerät nach Anspruch 1, dadurch gekennzeichnet, daß zwischen den mittleren Mähtrommeln (10) ein Träger (27, 36) vorgesehen ist, der sich im wesentlichen unterhalb des Maschinengestelles (9) nach unten erstreckt und der an seinem unteren Ende eine Querachse (29) trägt, die in Wirkverbindung mit den Armen (21, 33) des Tragrahmens (7) steht.

6. Landwirtschaftliches Anbaugerät nach Anspruch 5, dadurch gekennzeichnet, daß die Querachse (29) zwischen den Mänteln (11) der mittleren Mähtrommeln (10) und oberhalb der Ringkragen (12) der Mähtrommeln (10) angeordnet ist.

7. Landwirtschaftliches Anbaugerät nach den Ansprüchen 5 und 6, dadurch gekennzeichnet, daß der Träger (27) über eine schräge Pendelachse (25) mit dem Maschinengestell (9) verbunden ist, die von vorne oben nach hinten unten geneigt ist.

8. Landwirtschaftliches Anbaugerät nach Anspruch 7, dadurch gekennzeichnet, daß die Neigung der schrägen Pendelachse (25) zur Horizontalen mindestens 25° beträgt.

9. Landwirtschaftliches Anbaugerät nach Ansprüchen 5 und 6, dadurch gekennzeichnet, daß die Träger (36) fest mit dem Maschinenrahmen (9) verbunden sind.

10. Landwirtschaftliches Anbaugerät nach Ansprüchen 5 und 6, dadurch gekennzeichnet, daß die Arme (21, 33) Schlitze (22, 34, 35) besitzen, die von den freien Enden der Querachsen (29) durchsetzt werden.

11. Landwirtschaftliches Anbaugerät nach Anspruch 10, dadurch gkennzeichnet, daß die Schlitze (22) in der Armen (21) horizontal liegen.

12. Landwirtschaftliches Anbaugerät nach Anspruch 10, dadurch gekennzeichnet, daß die Schlitze einen horizontalen Abschnitt (34) und/oder einen nach hinten ansteigenden schrägen Abschnitt (35) haben.

13. Landwirtschaftliches Anbaugerät nach den Ansprüchen 10 - 12, dadurch gekennzeichnet, daß sich die freien Enden der Querachse (29) bei Vorwärtsfahrt an den in Fahrtrichtung hinteren Ende der horizontalen Abschnitte (22, 34) der Schlitze und bei Rückwärtsfahrt an den vorderen Enden der horizontalen Abschnitte (22, 34) anlegen.

14. Landwirtschaftliches Anbaugerät nach einem oder mehreren der vorhergehenden Ansprüche, dadurch gekennzeichnet, daß an dem Maschinengestell (9) befestigte Anschläge (32) vorhanden sind, die sich bei Rückwärtsfahrt derart an Anschlagnocken (23) oder dergleichen an den Armen (21, 33) anlegen, daß sich das Maschinengestell (9) nicht um eine Querachse (29) drehen kann.

15. Landwirtschaftliches Anbaugerät nach einem oder mehreren der vorhergehenden Ansprüche, dadurch gekennzeichnet, daß zwischen dem Oberlenker (2) und den Unterlenkern (3) der Dreipunktaufhängung Federn (6) eingeschaltet sind, die in Arbeitsstellung den Tragrahmen (7) nach oben anheben, soweit es die Gelenkverbindung zwischen dem Tragrahmen (7) und dem Maschinengestell (9) zulassen.

16. Landwirtschaftliches Anbaugerät nach Ansprüchen 5 und 6, dadurch gekennzeichnet, daß die Arme (21, 33) und die Träger (27, 36) beidendig des Maschinengestells (9) vorgesehen und die Mähtrommeln (10) zwischen diesen am Maschinengestell (9) angeordnet sind.

17. Landwirtschaftliches Anbaugerät nach Ansprüchen 1 und 5 - 16, dadurch gekennzeichnet, daß die Gelenkverbindungen mit den Querachsen (29) mit eine Abstand (a) hinter der die Drehaschsen der Mähtrommeln (10) verbindenden Vertikalebene, aber noch innerhalb der Projektionsfläche der Mäntel (11) der Mähtrommeln (10) liegen.

## Claims

1. Agricultural attachment, in particular a rotary mower, comprising a support frame (7) which can be pivotally connected to the front three-point suspension (2, 3) of a tractor, and a spring (6) by way of which a part of the weight of the attachment is transmitted to the tractor, and a machine frame structure (9) for the working tools which are operative at a spacing below same at a small height above the ground and which are for example in the form of mowing drums (10) with annular collars (12) carrying cutting blades (13), which machine frame structure (9) is rotatably connected by way of a pivot connection with a transverse axis (19, 20, 28, 29) to the free end of arms (8, 21, 33) facing downwardly on the support frame (7), wherein in the working position upon the occurrence of a longitudinal force (F) which is caused for example by an obstacle and which acts approximately at the height of the working tools (12, 13) centrally or eccentrically relative to the longitudinal central plane, the side of the mower at which the longitudinal force (F) acts on the mower can deflect upwardly and rearwardly, characterised in that the arms (8, 21, 33) on the support frame (7) are directed downwardly to such a degree that the pivot connection (19, 20, 28, 29) lies at a spacing beneath the machine frame structure (9) directly above the working tools (the annular collars 12) which operate in the vicinity of the ground.

2. Agricultural attachment according to claim 1 characterised in that the pivot connection is formed by bars (19) which at one end are pivotally connected to the free end (20) of the arms (8), extend in the working position from there downwardly and rearwardly and at their rear end are pivotally connected to support arms (18) of the machine frame structure (9).

3. Agricultural attachment according to claim 2 characterised in that the arms (8), the support arms (18) and the bars (19) are provided at both ends of the machine frame structure (9) and the working tools (10) are arranged same on the machine frame structure (9).

4. Agricultural attachment according to claims 2 and 3 characterised in that free mobility of the bars (19) upwardly and downwardly is limited by stops.

5. Agricultural attachment according to claim 1 characterised in that provided between the middle drums (10) is a carrier (27, 36) which extends downwardly substantially beneath the machine frame structure (9) and which at its lower end carries a transverse axis (29) which is operatively connected to the arms (21, 33) of the support frame (7).

6. Agricultural attachment according to claim 5 characterised in that the transverse axis (29) is arranged between the peripheral surfaces (11) of the middle mowing drums (10) and above the annular collars (12) of the mowing drums (10).

7. Agricultural attachment according to claims 5 and 6 characterised in that the carrier (27) is connected to the machine frame structure (9) by way of an inclined pendulum axis (25) which is inclined from the front at the top rearwardly and downwardly.

8. Agricultural attachment according to claim 7 characterised in that the inclination of the inclined pendum axis (25) relative to the horizontal is at least 25°.

9. Agricultural attachment according to claims 5 and 6 characterised in that the carriers (36) are fixedly connected to the machine frame structure (9).

10. Agricultural attachment according to claims 5 and 6 characterised in that the arms (21, 33) have slots (22, 34, 35) through which the free ends of the transverse axes (29) pass.

11. Agricultural attachment according to claim 10 characterised in that the slots (22) are disposed horizontally in the arms (21).

12. Agricultural attachment according to claim 10 characterised in that the slots have a horizontal portion (34) and/or rearwardly rising inclined portion (35).

13. Agricultural attachment according to claims 10 to 12 characterised in that in forward travel the free ends of the transverse axis (29) bear against the ends, which are at the rear in the direction of travel, of the horizontal portions (22, 34) of the slots and in reverse travel the free ends of the transverse axis bear against the front ends of the horizontal portions (22, 34).

14. Agricultural attachment according to one or more of the preceding claims characterised in that there are provided stops (32) which are fixed to the machine frame structure (9) and which in reverse travel bear against stop projections (23) or the like on the arms (21, 33) in such a way that the machine frame structure (9) cannot rotate about a transverse axis (29).

15. Agricultural attachment according to one or more of the preceding claims characterised in that springs (6) are connected between the top link (2) and the bottom links (3) of the three-point suspension, which springs in the working position lift the support frame (7) upwardly to the extent permitted by the pivot connection between the support frame (7) and the machine frame structure (9).

16. Agricultural attachment according to claims 5 and 6 characterised in that the arms (21, 33) and the carriers (27, 36) are provided at both ends of the machine frame structure (9) and the mowing drums (10) are arranged between them on the machine frame structure (9).

17. Agricultural attachment according to claims 1 and 5 to 16 characterised in that the pivot connections with the transverse axes (29) are disposed at a spacing (a) behind the vertical plane connecting the axes of rotation of the mowing drums (10), but still within the surfaces of projection of the peripheral surfaces (11) of the mowing drums (10).

**Revendications**

1. Machine agricole, en particulier rotofaucheuse, comprenant un châssis porteur (7) pouvant être raccordé à l'attelage à trois points avant (2, 3) d'un tracteur et un ressort (6) par lequel une partie du poids de la machine peut être transférée au tracteur, et une monture (9) pour les outils de travail constitués par exemple sous forme de tambours de fauchage (10) qui exercent leur action au-dessous d'elle et à une faible hauteur au-dessus du sol et qui comprennent des collets annulaires (12) supportant des outils de coupe (13), monture qui est raccordée par une liaison articulée à axe transversal (19, 20, 28, 29) pouvant tourner à l'extrémité libre de bras (8, 21, 33) s'étendant vers le bas à partir du châssis porteur (7), moyennant quoi, dans la position de travail et dans le cas de la rencontre par exemple d'une force longitudinale (F) provoquée par un obstacle et agissant sensiblement à la hauteur des outils de travail (12, 13) de façon centrée ou excentrée par rapport au plan longitudinal médian, le côté de l'outil de fauchage sur lequel agit la force longitudinale (F) peut dévier vers le haut et vers l'arrière, caractérisée en ce que les bras (8, 21, 33) sont montés sur la châssis porteur (7) en étant prolongés vers le bas de manière que la liaison articulée (19, 20, 28, 29) soit située directement au-dessus des outils de travail (les collets annulaires 12) qui travaillent à proximité du sol à une certaine distance au-dessous de la monture (9).

2. Machine agricole selon la revendication 1, caractérisée en ce que la liaison articulée est constituée par des pattes (19) qui sont reliées sur un côté de façon articulée à l'extrémité libre (20) des bras (8), s'étendent de là vers l'arrière et vers le bas dans la position de travail, et sont reliées à leur extrémité inférieure à des bras d'appui (18) de la monture (9).

3. Machine agricole selon la revendication 2, caractérisée en ce que les bras (8), les bras d'appui (18) et les pattes (19) sont prévus des deux côtés de la monture (9) et les outils de travail (10) sont disposés entre ceux-ci sur la monture (9).

4. Machine agricole selon les revendications 2 et 3, caractérisée en ce que la liberté de mouvement des pattes (19) est limitée vers le haut et vers le bas par des butées.

5. Machine agricole selon la revendication 1, caractérisée en ce qu'il est prévu entre les tambours de fauchage (10) du centre un support (27, 36) qui s'étend vers le bas sensiblement au-dessous de la monture (9) et qui supporte à son extrémité inférieure un axe transversal (29) qui est en liaison avec les bras (21, 33) du châssis porteur (7).

6. Machine agricole selon la revendication 5, caractérisée en ce que l'axe transversal (29) est monté entre les enveloppes (11) des tambours de fauchage (10) du centre et au-dessus des collets annulaires (12) des tambours de fauchage (10).

7. Machine agricole selon les revendications 5 et 6, caractérisée en ce que le support (27) est relié à la monture (9) par l'intermédiaire d'un axe pendulaire oblique (25) qui est incliné du haut vers le bas et de l'avant vers l'arrière.

8. Machine agricole selon la revendication 7, caractérisée en ce que l'inclinaison de l'axe pendulaire oblique (25) est d'au moins 25° par rapport au plan horizontal.

9. Machine agricole selon les revendications 5 et 6, caractérisée en ce que les supports (36) sont solidaires de la monture (9).

10. Machine agricole selon les revendications 5 et 6, caractérisée en ce que les bras (21, 33) comprennent des fentes (22, 34, 35) traversées par les extrémités libres de l'axe transversal (29).

11. Machine agricole selon la revendication 10, caractérisée en ce que les fentes (22) des bras (21) horizontales.

12. Machine agricole selon la revendication 10, caractérisée en ce que les fentes comprennent une section horizontale (34) et/ou une section inclinée (35) qui monte vers l'arrière.

13. Machine agricole selon les revendications 10 à 12, caractérisée en ce que les extrémités libres de l'axe transversal (29) sont disposées, lors de la marche vers l'avant, aux extrémités arrière des sections horizontales (22, 34) des fentes, et dans le cas d'une marche vers l'arrière, dans les extrémités avant des sections horizontales (22, 34).

14. Machine agricole selon l'une quelconque ou plusieurs des revendications précédentes, caractérisée en ce que sont prévues des butées (32) fixées à la monture (9), qui reposent pendant la marche arrière contre des saillies de butée (23) ou analogues des bras (21, 33) de manière que la monture (9) ne puisse pas tourner autour d'un axe transversal (29).

15. Machine agricole selon l'une quelconque ou plusieurs des revendications précédentes, caractérisée en ce que des ressorts sont incorporés entre le bras supérieur (2) et les bras inférieurs (3) de la suspension à trois points, qui soulèvent le châssis porteur (7) en position de travail dans la mesure où la liaison articulée entre le châssis porteur (7) et la monture (9) le permettent.

16. Machine agricole selon les revendications 5 et 6, caractérisée en ce que les bras (21, 33) et les supports (27, 36) sont prévus sur les deux côtés de la monture (9) et les tambours de fauchage (10) sont montés entre ceux-ci sur la monture (9).

17. Machine agricole selon les revendications 1 et 5 à 16, caractérisée en ce que les liaisons articulées avec les axes transversaux (29) sont situées à une certaine distance (a) à l'arrière du plan vertical reliant les axes de rotation des tambours de fauchage (10), mais cependant à l'intérieur de la surface en projection de l'enveloppe (11) des tambours de fauchage (10).

Fig.1

A

F

EP 0 394 830 B1

Fig. 2

EP 0 394 830 B1

Fig. 3

EP 0 394 830 B1

Fig. 4

EP 0 394 830 B1

Fig. 5

EP 0 394 830 B1

Fig. 6